# EUROPEAN PATENT SPECIFICATION

(11) **EP 3 062 987 B1**
(45) Date of publication and mention of the grant of the patent: **20.11.2019**
(21) Application number: 14796920.8
(22) Date of filing: 13.10.2014
(51) Int. Cl.: B29C 59/02, B44F 9/02, B24B 7/30

(54) **METHOD FOR DECORATING PVC ELEMENTS**
VERFAHREN ZUM DEKORIEREN VON PVC-ELEMENTEN
PROCÉDÉ DE DÉCORATION D'ÉLÉMENTS EN PVC

(30) Priority: 29.10.2013 PL 40582613
(43) Date of publication of application: 07.09.2016
(73) Proprietor: Przedsi Biorstwo Wielobran Owe Vikking KTS Sp. Z o. o., 21-500 Biala Podlaska (PL)
(72) Inventor: KONASZUK, Tadeusz, PL-21-530 Piszczac (PL)
(74) Representative: Kalita, Lucjan
(86) International application number: PCT/PL2014/050063
(87) International publication number: WO 2015/065211

(56) References cited:
- WO-A2-2004/035263
- DE-U1-202006 007 797
- JP-A- 2013 212 695
- US-A- 2 483 584

## Description

The present invention relates to a method for decorating surfaces of PVC products.

A number of furnishings of buildings and dwellings, in particular furnishings in the field of building carpentry, and components of such products are made of plastic. External texture of such elements is a characteristic surface resulting from the physical properties of the material from which it is made, and the manner of treatment or additives and impurities of the base material. That texture can be smooth, rough, wavy, not uniform, wrinkled. Often said texture is also described by comparison to other materials with generally recognizable and distinctive surface, such as velvet, leathery, canvas texture.

In the search for attractive design and an appropriate surface texture of products, consumers like to use wood products, which surface is antiqued by a rustic appearance. To achieve such of appearance a technological process of the surface of wood treatment called structuring is used, said treatment aim is to give aged (rustic) look to the wood by exposing the natural grain of the wood.

With respect to the wooden elements, the structuring is a known process. It involves using the appropriate brushes, usually wire-made, by means of which, abrasion of the soft parts of the wood occurs, at the same time revealing the harder ones. After performing of aging, the surface gives the impression of intensely used for years and achieves a specific rustic look of a spatial structure. The next step of said process is grinding, by using the appropriate brushes, for example brushing by a tynex head, the aim of which is to remove the torn fibers from the surface of the wood and smoothing the sharp edges of the pores caused by the action of the wire brush. The third step uses a head with replaceable abrasive brushes, which appropriately selected guarantee the final smoothing of the surface and its preparation for staining and varnishing.

Shown above the process of wood structuring, as it is apparent from the name, is applied to the wood, that is, such a material, that has both hard and soft grain. Used in the process brushes, essentially brush-out only a soft layer of wood, and therefore in this case the process runs according to a predetermined objective.

There are also known plastic products having wooden decoration on the surface obtained by veneering them with PVC films, with patterns that imitate the surface of the wood product.

Imitation of the grain of the wood, on the PVC films, which are glued to the products, is achieved through a method of printing or gentle embossing wood-grain pattern with printed color scheme on the surface of a film. For this reason, they are usually flat imitation or ones with a very little depth. The disadvantages of this solution are the high costs of implementation of this decoration and the high vulnerability to mechanical damage of the film, and difficult to repair damages.

Yet another known method for obtaining a structure imitating the wood grain on the surface of the PVC is technology called calendering. It involves stamping a pattern on the surface of the hot PVC profile, which exits the casting die, by profiled rollers. The disadvantage of this system is the ability to decorate only the full profiles - the ones without cavities inside.

Patent WO 2004/035263 A2 discloses a method for structuring the surface of profiles, floor coverings, and similar semi finished products by brushing. According to this method the brushes are arranged next to each other and spaced in the traveling direction of the semi finished products. Brushes in the following rows are arranged alternately and overlap with respect to the gap between the brushes in the previous row. Number of axially spaced brush depends on the width of the surface to be treated. Rotary rollers, on which the brushes are mounted, are arranged parallel to each other and perpendicular to the direction of transport. Treated surface is brushed against the direction of rotation of the brushes. The surface treatment is carried out using the following parameters: relative peripheral speed between the surface of the brush and the surface to be machined of 10 m/s to 15 m/s, which corresponds to the speed of a rotating brush with a diameter of 25 cm between 800 rev/min to 900 rev/min, using the feed speed of 1 m/s to 2 m/s. By using this process brush bristles as a result of the occurrence of centrifugal force cut into the surface structure of the panel and the outer side bristles axially migrate to the outside, so that the grooves in the direction of the feed are not parallel but formed as a pattern of wood grain. The disclosed method of processing is applicable in particular to the surfaces of the wooden elements, in which the pattern of wood grain can be easily achieved.

Patent JP 2013 212695 A discloses a device for surface treatment and a method of performing surface treatment of particleboard which surface consist of a layer formed by compression of pulverized cellulose mixed with resin in order to be able to obtain on the surface of a clear structure consisting of a number of wood fibers with an irregular thickness, density and orientation which is not parallel with respect to the machined edge. The device comprises a conveyor, which slides the boards and the rotating roller brush pressed against the surface to be machined. The rotating brushes contain attached to the circumference of a number of steel wires. Both the thickness of the individual wires and the mutual distance between them are not predetermined. While the boards slide the brushes rotate in accordance with or opposite to the direction of the slide. On the pivot axis there are mounted several rotating brushes with not predetermined spacing between them, which cover the entire width of the processed boards. According to the present description, the method of surface treatment performed by the disclosed device lies in the fact that the surface of the board achieves visible grooves imitating the grain of wood, wherein the boards which are receiving the grooves are positioned on the conveyor so that the edge of the machined surface of the board is not parallel to the direction of travel. Disclosed herein method of processing is mainly used for particleboards, wherein the surface layer there are numerous cellulose inclusions. During processing in these places the steel wires of the rotary brush cut into, thereby generating grooves imitating the wood grain. However, due to the fixed reciprocity of the rotation of brushes mounted on a shaft at right angle to the longitudinal direction of the conveyor, the wood grain pattern is generally parallel to each other and extends with longitudinal intervals.

This method of surface treatment may not produce the patter most similar to the pattern of the wood grain on the ground that the lines of the pattern are substantially parallel and are intermittently and in addition, it is mainly applied to the surface of the elements comprising a cellulose inclusions.

The aim of the invention is to provide such a method for decorating PVC surfaces, in particular the chambered elements, where after conducting of said method, the surface of the element will have a high-quality appearance of the structured surface of the wood element. Surface of elements made of PVC, as the blanks, where said surface to be treated is smooth and of uniform structure, thereby starting of cutting into by wires of rotating wire brush is difficult and also it is impossible to obtain a grain shape of curve line at irregular gaps. Satisfactory appearance of a homogeneous surface of the PVC, the most similar to natural wood grain as well as ease of starting of cutting into by wire brushes into smooth surface of the element is obtained by applying the method according to the invention lies in that:
in a first step, using a machine equipped with a mechanical sliding table with adjustable feed speed, and a variable speed spindle whose axis is perpendicular to the direction of slide of the table and said spindle has ability to approach, with adjustable down force, to the workpiece, there is a pattern cut in the surface of an element in the form of elongated irregular lines imitating aged wood, using a wire brush roller having a shape of a cylinder with dimension of outer diameter from Ø 80 to Ø 400 mm and in the next step, the surface with obtained pattern is treated in order to blunt sharp edges and to remove burrs. The essence of the invention is that, the brush implemented for cutting the pattern is formed from steel or brass wires with a diameter of 0.2 to 0.5 mm and mounted on the machine spindle in such a way that the axis of the cylinder is inclined to the spindle axis at an angle of 1 to 3 degrees. Through such brush mounting on the machine spindle, successive ends of the brush's wires move sideways back and forth during rotation. In addition, the wires are pushed deeper or shallower against the work surface. The shape of the cut pattern, similar to that of a natural aged wood is obtained with combined rotational speed of the brush in the range of 100 to 800 rev/min and the table feed speed of 0.7 to 1.2 m/min. The lines reflecting wood grain are not straight lines and are not parallel to each other and also due to an appropriate rate of the longitudinal feed speed do not have gaps.

The surface with obtained pattern is treated in order to blunt sharp edges and to remove burrs by brushing using tynex head. This operation can also be carried by hand or mechanical deburring using abrasives or by sandblasting.

The method according to the invention has a number of valuable advantages. Mainly that, the pattern imitating natural wood grain cut on the surface of the element, is the same as wood grain, unique at any part of the surface. Uniqueness is achieved by the fact, that the brush roller's ends of the wires, where said roller is mounted at an angle on a rotating spindle, carry out a swiveling sideways movement and at the same time ends of the wires travel more or less move towards the element's surface, and also the wires are subject to elastic flexure. The grain that is cut could be shallower or deeper, which depends on the extent of movement of the cylindrical brush towards the work surface.

An important advantage is also that, the decorating according to the invention is less expensive than other processes, in particular the process of applying films simulating wood grain pattern on the PVC products.

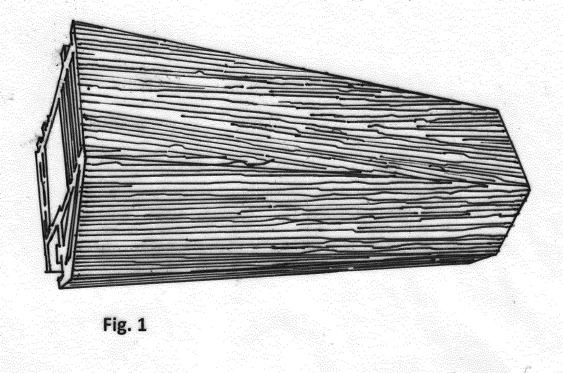

To illustrate the effect which is achieved by the method according to the invention, there is a fragment of the doorframe is a perspective view, with a visible pattern on its side surfaces shown in Fig.1.

### An embodiment of a method

In an exemplary embodiment, a pattern is made to an elongated element having spatial cross-section constituting the frame of the door. The surfaces of the frame profiles, which are to be patterned, are produced during the extrusion process as smooth. The element is fixed to a machine table, then in the first step there is aged wood pattern cut in the smooth, flat surface of said element with a wire brush roller mounted on a machine spindle. The roller brush formed of steel wire having a diameter of 0.4 mm, with said roller outer diameter of 120 mm was used. The roller brush was mounted on a spindle with an angle of inclination of 1.2 degrees with respect to the spindle axis. The following operating parameters of the machine were applied: the spindle speed with the attached brush - 200 rev/min, feed rate of the table with fixed to it element - 0.8 m/min. After the pattern is made, in the next step, the surface of the element is treated in order to blunt sharp edges and to remove burrs by brushing using tynex head. This is done on the same, or similar machine equipped with a table with a mechanical drive and on said machine's spindle there is mounted tynex head or cylindrical brush made of sanding fleece. Operating parameters, during performing this step, are set according to recommendations for a particular head.

In the final stage, the surface is degreased and coated with lacquer using patina.

In an alternative embodiment, the surface with obtained pattern is treated in order to blunt sharp edges and to remove burrs by sandblasting or manual deburring using sanding fleece with suitable granulation.

## Claims

1. Method for decorating a surface of PVC elements, wherein the surface with appearance of aged, natural wood pattern is obtained, through stages, and in final stages the surface is smoothed, degreased and coated with using single-colored varnishes or using patinas, where in the first step, using a machine equipped with a mechanical sliding table with adjustable feed speed and a variable speed spindle whose axis is perpendicular to the direction of slide of the table and said spindle has ability to approach with adjustable down force to a workpiece, there is a pattern cut in the surface of an element in the form of elongated irregular lines imitating aged wood, using a wire brush roller in the shape of a cylinder, with dimension of outer diameter from Ø 80 to Ø 400 mm, and in the next step, the surface with obtained pattern is treated in order to blunt sharp edges and to remove burrs, **characterized in that**, the implemented brush is formed from steel or brass wires with a diameter of 0.2 to 0.5 mm and it is mounted on the machine spindle in such a way that the axis of the cylinder is inclined to the spindle axis at an angle of 1 to 3 degrees.

2. The method according to claim 1, **characterized in that**, the implemented rotational speed of the brush ranges from 100 to 800 rev/min

3. The method according to claim 1 or 2, **characterized in that**, the implemented table feed speed ranges from 0.7 to 1.2 m/min.

4. The method according to any one of the preceding claims, **characterized in that**, the surface with obtained pattern is treated in order to blunt sharp edges and to remove burrs by brushing using tynex head.

5. The method according to claims 1 to 4, **characterized in that**, the surface with obtained pattern is treated in order to blunt sharp edges and to remove burrs by abrasive deburring.

6. The method according to claims 1 to 4, **characterized in that**, the surface with obtained pattern is treated in order to blunt sharp edges and to remove burrs by sandblasting.

## Patentansprüche

1. Verfahren für Dekoration von Oberflächen von Werkstücken aus PVC, wobei die Oberfläche wie gealtertes, Naturholz aussieht, durch stufenweise Einwirkung, wobei in den Endstufen die Oberfläche geglättet, entfettet und mit einfarbigen Lacken oder mit Patinen lackiert wird wo, in der ersten Stufe mittels einer Werkzeugmaschine, ausgerüstet mit Schiebetisch mit mechanischem Vorschub und verstellbarer Höhe und mit Spindel, deren quer Achse zur Tischvorschubrichtung läuft und deren Drehzahl und die Andruckkraft an das Werkstück verstellbar sind, auf der Oberfläche des Werkstücks ein Muster des gealterten Holzes mittels einer zylindrischen Drahtbürste und eine zylindrische Form mit einem Außendurchmesser von Ø 80 bis Ø 400 mm aufweist geschnitten wird und in der nächsten Stufe die mit dem Muster versehene Oberfläche einer Kantenfasen- und Entgratungsbearbeitung unterzogen wird, **durch gekennzeichnet,** dass die eingesetzte Drahtbürste aus Stahl- oder Messingdrähten mit einem Durchmesser von Ø 0,2 bis Ø 0,5 mm besteht und an einer Spindel derart angeordnet ist, dass die Achse dieses Zylinders unter einem Winkel von 1° bis 3° zur Spindelachse geneigt ist.

2. Verfahren nach Anspruch 1, **dadurch gekennzeichnet, dass** eine Drehzahl von 100 bis 800 U/min verwendet wird.

3. Verfahren nach Anspruch 1 oder 2, **dadurch gekennzeichnet, dass** eine Tischvorschubgeschwindigkeit von 0,7 bis 1,2 m/min verwendet wird.

4. Verfahren nach jedem der oben genannten Ansprüche, **dadurch gekennzeichnet, dass** die Oberfläche mit dem erzeugten Muster einer Verarbeitung durch Fasen und Graten mittels Bürsten mit einer Tynexbürstenkopf unterzogen wird.

5. Verfahren nach Ansprüchen 1 bis 4, **dadurch gekennzeichnet, dass** die Oberfläche mit dem erzeugten Muster einer Verarbeitung durch Fasen und Graten mittels Entgraten unter Verwendung von Schleifstoffen unterzogen wird.

6. Verfahren nach Ansprüchen 1 bis 4, **dadurch gekennzeichnet, dass** die Oberfläche mit dem erzeugten Muster einer Verarbeitung durch Fasen und Graten mittels Sandstrahlen unterzogen wird.

## Revendications

1. Procédé de décoration de la surface d'éléments en PVC, dans lequel la surface revêt l'aspect d'un motif de bois naturel, vieilli par une interaction étape par étape et dans les étapes finales, la surface est lissée, dégraissée et laquée avec des vernis monochromatiques ou avec l'utilisation de patines, ou dans la première étape, à l'aide d'une machine-outil équipée d'une table coulissante à avance mécanique réglable en hauteur et d'une broche dont l'axe est perpendiculaire au sens d'avance de la table, ayant une vitesse de rotation réglable et offrant la possibilité de l'approcher avec une pression réglable à la pièce traitée, le motif du bois vieilli étant coupé sur la surface de l'élément avec une brosse cylindrique en métal et dans l'étape suivante la surface avec le motif obtenu étant soumise au traitement par émoussement des arêtes vives et par ébarbage, et la brosse est en forme d'un cylindre d'un diamètre extérieur compris entre 80 et 400 mm, et repose sur la broche, **caractérisé en ce que** la brosse utilisée est constituée de fils d'acier ou de laiton d'un diamètre Ø de 0,2 à 0,5 mm et repose sur la broche de sorte que l'axe de ce cylindre est incliné vers l'axe de la brosse sous un angle compris entre 1° et 3°.

2. Le procédé selon les revendications 1, **caractérisé en ce que** la vitesse de rotation de la brosse utilisée varie de 100 à 800 tr/min.

3. Le procédé selon les revendications 1 ou 2, **caractérisé en ce que** la vitesse d'avance de la table est de 0,7 à 1,2 m/min.

4. Le procédé selon chacune des revendications précédentes, **caractérisé en ce que** la surface avec le motif obtenu est soumise à l'émoussement des arêtes vives et à l'ébarbage par brossage avec une tête tynex.

5. Le procédé selon les revendications 1 à 4, **caractérisé en ce que** la surface avec le motif obtenu est soumise à l'émoussement des arêtes vives et à l'ébarbage par ébavurage abrasif.

6. Le procédé selon les revendications 1 à 4, **caractérisé en ce que** la surface avec le motif obtenu est soumise à l'émoussement des arêtes vives et à l'ébarbage par sablage.
